# EUROPEAN PATENT APPLICATION

(11) **EP 4 653 209 A1**
(43) Date of publication of application: **26.11.2025**
(21) Application number: 25170277.5
(22) Date of filing: 14.04.2025
(51) Int. Cl.: B60C 1/00, C08L 7/00

(54) **RUBBER COMPOSITION FOR BASE TREAD AND TIRE**

(30) Priority: 23.05.2024 JP 2024083803
(71) Applicant: Toyo Tire Corporation, Itami-shi, Hyogo 664-0847 (JP)
(72) Inventor: KIMURA, Takuya, Itami-shi, Hyogo, 664-0847 (JP)
(74) Representative: Ricker, Mathias

(57) **Abstract**

A rubber composition for a base tread according to an embodiment includes a rubber component containing 70 mass% or more of natural rubber, a first filler that is carbon black having an N₂SA of less than 60 m²/g, a second filler that is carbon black having an N₂SA of 60 m²/g or more and/or silica, sulfur, and a sulfenamide-based vulcanization accelerator. Per 100 parts by mass of the rubber component, the amount of the first filler is 10 to 45 parts by mass, the amount of the second filler is 15 to 30 parts by mass, the total amount of the first filler and the second filler is 35 to 60 parts by mass, the amount of the sulfur is 1.6 to 3.0 parts by mass, and the amount of the sulfenamide-based vulcanization accelerator is 1.6 to 3.0 parts by mass.

## Description

### BACKGROUND OF THE INVENTION

### 1. Field of the Invention

The present invention relates to a rubber composition for a base tread and also to a tire using the same.

### 2. Description of Related Art

With the increasing demand for more fuel-efficient automobiles, rubber members having excellent low heat generation properties are also desired for tires. Generally, an increase in the amount of filler incorporated into a rubber composition leads to increased hardness and improved steering stability, but also causes the deterioration of low heat generation properties. Conversely, a decrease in the amount of filler leads to improved low heat generation properties, but the steering stability tends to decrease. Recent fuel-efficient tires have high requirements for low heat generation properties. Therefore, in the case where a conventional rubber composition having excellent low heat generation properties is used for a base tread, there is a problem in that the hardness is low, causing the deterioration of steering stability.

JP2015-120783A discloses that in order to improve fuel efficiency while maintaining rubber processability and steering stability, in a rubber composition for a base tread, carbon black and a specific sulfide compound are incorporated into a rubber component containing a tin-modified polybutadiene rubber.

JP2022-165622A discloses that in order to reduce rolling resistance while maintaining steering stability and durability, in a rubber composition for a base tread, carbon black having a specific CTAB adsorption specific surface area and silica are incorporated into a rubber component, and also, as the rubber component, natural rubber and a specific butadiene rubber are used together.

JP2022-064752A discloses that in order to improve low heat generation properties while maintaining crack resistance, in a rubber composition for a base tread, a rubber component containing an isoprene-based rubber is used together with carbon black having a nitrogen adsorption specific surface area of less than 40 m²/g, carbon black having a nitrogen adsorption specific surface area of 45 m²/g or more, and silica.

### SUMMARY OF THE INVENTION

Conventional rubber compositions for base treads are not necessarily sufficient in terms of improving steering stability and low heat generation properties while suppressing the deterioration of durability, and further improvements are required.

In view of the above points, an object of an embodiment of the invention is to provide a rubber composition for a base tread, which is capable of improving steering stability and low heat generation properties while suppressing the deterioration of durability.

The invention includes the following embodiments.
[1] A rubber composition for a base tread, including a rubber component, a first filler that is carbon black having a nitrogen adsorption specific surface area of less than 60 m²/g, a second filler that is carbon black having a nitrogen adsorption specific surface area of 60 m²/g or more and/or silica, sulfur, and a sulfenamide-based vulcanization accelerator, in which
   the rubber component contains 70 mass% or more of natural rubber, and,
   per 100 parts by mass of the rubber component, the amount of the first filler is 10 to 45 parts by mass, the amount of the second filler is 15 to 30 parts by mass, the total amount of the first filler and the second filler is 35 to 60 parts by mass, the amount of the sulfur is 1.6 to 3.0 parts by mass, and the amount of the sulfenamide-based vulcanization accelerator is 1.6 to 3.0 parts by mass.
[2] The rubber composition for a base tread according to [1], in which the nitrogen adsorption specific surface area of the carbon black in the first filler is 20 m²/g or more and less than 60 m²/g.
[3] The rubber composition for a base tread according to [1] or [2], in which the nitrogen adsorption specific surface area of the carbon black in the second filler is 60 m²/g or more and 100 m²/g or less.
[4] The rubber composition for a base tread according to any one of [1] to [3], in which the sulfenamide-based vulcanization accelerator is at least one selected from the group consisting of N-(tert-butyl)-2-benzothiazole sulfenamide and N-cyclohexyl-2-benzothiazole sulfenamide.
[5] The rubber composition for a base tread according to any one of [1] to [4], in which the first filler includes carbon black (A1) having a nitrogen adsorption specific surface area of 20 m²/g or more and less than 40 m²/g and carbon black (A2) having a nitrogen adsorption specific surface area of 40 m²/g or more and less than 60 m²/g.
[6] The rubber composition for a base tread according to [5], in which the mass ratio (A1)/(A2) of the carbon black (A1) to the carbon black (A2) is 20/80 to 80/20.
[7] The rubber composition for a base tread according to any one of [1] to [6], in which the second filler contains the silica in an amount of 50 to 100 mass%.
[8] The rubber composition for a base tread according to any one of [1] to [7], further including 6 parts by mass or more of a silane coupling agent per 100 parts by mass of the silica.
[9] A tire having a base tread formed from the rubber composition for a base tread according to any one of [1] to [8].

According to an embodiment of the invention, it is possible to provide a rubber composition for a base tread, which is capable of improving steering stability and low heat generation properties while suppressing the deterioration of durability.

### DESCRIPTION OF EMBODIMENTS

The rubber composition for a base tread according to this embodiment (hereinafter also simply referred to as "rubber composition") includes a rubber component, a first filler, a second filler, sulfur, and a sulfenamide-based vulcanization accelerator.

The rubber component contains 70 mass% or more of natural rubber (NR). That is, 100 mass% of the rubber component contains 70 to 100 mass% of natural rubber, and may also be natural rubber alone. The proportion of natural rubber is preferably 75 mass% or more, and more preferably 80 mass% or more. The rubber component may also contain other diene rubbers in addition to natural rubber. As other diene rubbers, for example, isoprene rubber (polyisoprene) (IR), butadiene rubber (polybutadiene) (BR), styrene butadiene rubber (SBR), butadiene-isoprene copolymer rubbers, styrene-butadiene-isoprene copolymer rubbers, and the like can be mentioned.

Here, a diene rubber refers to a rubber with a repeating unit corresponding to a diene monomer having a conjugated double bond. The concept of diene rubbers also encompasses those modified at the end or backbone as necessary (e.g., end-modified BR and end-modified SBR).

In one embodiment, it is preferable that the rubber component contains 70 to 100 mass% of natural rubber and 0 to 30 mass% of butadiene rubber. It is more preferable that the rubber component contains 75 to 100 mass% of natural rubber and 0 to 25 mass% of butadiene rubber, and it is still more preferable that the rubber component contains 80 to 100 mass% of natural rubber and 0 to 20 mass% of butadiene rubber. In this case, the rubber component may be natural rubber alone, that is, may contain 100 mass% of natural rubber and 0 mass% of butadiene rubber.

The butadiene rubber is not particularly limited, and may be a modified butadiene rubber that has been modified at the end and/or backbone, or may also be an unmodified butadiene rubber without modification. As the modified butadiene rubber, BR that has a functional group introduced into the end and/or backbone thereof and thus has been modified with the functional group is used. The functional group preferably contains an oxygen atom and/or a nitrogen atom and may be, for example, at least one selected from the group consisting of an amino group, a hydroxy group, an alkoxy group, an epoxy group, and a carboxy group.

The butadiene rubber may also be a high-cis butadiene rubber (high-cis BR) having a cis-1,4 bond content of 90 mass% or more (more preferably 95 mass% or more). Examples of high-cis BR include butadiene rubbers polymerized using a cobalt catalyst or a neodymium catalyst. Here, the cis-1,4 bond content is a value calculated from the integral ratio of the ¹H-NMR spectrum.

The first filler is carbon black (A) having a nitrogen adsorption specific surface area (N₂SA) of less than 60 m²/g, and is large-particle-size carbon black having a larger particle size than the carbon black in the second filler. The N₂SA of the carbon black (A) is preferably 20 m²/g or more and less than 60 m²/g, more preferably 20 to 50 m²/g, and still more preferably 25 to 45 m²/g.

As used herein, the nitrogen adsorption specific surface area (N₂SA) of carbon black is measured in accordance with JIS K6217-2:2017, Method A.

As the first filler, a single kind of carbon black having an N₂SA of less than 60 m²/g may be used alone, and it is also possible to use two or more kinds together. The first filler preferably contains carbon black (A1) having an N₂SA of 20 m²/g or more and less than 40 m²/g and carbon black (A2) having an N₂SA of 40 m²/g or more and less than 60 m²/g. As a result of using plural kinds of carbon black having different N₂SAs together in this manner, the improving effect on low heat generation properties can be further enhanced.

The N₂SA of the carbon black (A1) is more preferably 20 to 35 m²/g, and still more preferably 25 to 30 m²/g. The N₂SA of the carbon black (A2) is more preferably 40 to 55 m²/g, and still more preferably 40 to 50 m²/g.

In the case where the carbon black (A1) and the carbon black (A2) are used together as the first filler, the ratio of the two is not particularly limited, but the mass ratio (A1)/(A2) is preferably 20/80 to 80/20, more preferably 30/70 to 70/30, and still more preferably 40/60 to 60/40.

The first filler content is 10 to 45 parts by mass per 100 parts by mass of the rubber component. When the first filler content is 10 parts by mass or more, the improving effect on low heat generation properties can be enhanced. The first filler content per 100 parts by mass of the rubber component is preferably 15 to 40 parts by mass, more preferably 20 to 35 parts by mass, and still more preferably 23 to 30 parts by mass.

The second filler is carbon black (B) having a nitrogen adsorption specific surface area (N₂SA) of 60 m²/g or more or silica, and it is also possible to use the carbon black (B) and silica together.

The carbon black (B) is small-particle-size carbon black having a smaller particle size than the carbon black (A) in the first filler, and is superior in reinforcing properties. The N₂SA of the carbon black (B) is preferably 60 to 100 m²/g, more preferably 65 to 100 m²/g, and still more preferably 70 to 95 m²/g. In the case where the carbon black (B) is used as the second filler, a single kind of carbon black having an N₂SA of 60 m²/g or more may be used alone, and it is also possible to use two or more kinds together.

The silica used as the second filler is preferably wet silica such as wet-precipitated silica or wet-gelled silica. The nitrogen adsorption specific surface area (BET) of the silica is not particularly limited and may be, for example, 100 to 300 m²/g, 150 to 250 m²/g, or 180 to 220 m²/g.

As used herein, the nitrogen adsorption specific surface area of silica is a BET specific surface area measured in accordance with the BET method described in JIS K6430:2008.

The second filler content is 15 to 30 parts by mass per 100 parts by mass of the rubber component. When the second filler content is 15 parts by mass or more, the hardness can be enhanced to improve steering stability. When the second filler content is 30 parts by mass or less, the improving effect on low heat generation properties can be enhanced. The second filler content per 100 parts by mass of the rubber component is preferably 17 to 28 parts by mass, more preferably 18 to 25 parts by mass, and still more preferably 20 to 25 parts by mass.

**In** one embodiment, the second filler preferably contains silica. **In** this case, the amount of silica in 100 mass% of the second filler may be 50 to 100 mass%, 80 to 100 mass%, or 100 mass% (i.e., silica alone).

The total content of the first filler and the second filler is 35 to 60 parts by mass per 100 parts by mass of the rubber component. When the total filler amount is 35 parts by mass or more in this manner, a decrease in hardness can be suppressed to improve steering stability. When the total filler amount is 60 parts by mass or less, the deterioration of low heat generation properties can be suppressed. The total filler amount per 100 parts by mass of the rubber component is preferably 40 to 55 parts by mass, and more preferably 42 to 53 parts by mass.

The sulfur as a vulcanizing agent is not particularly limited, and, for example, powdered sulfur, precipitated sulfur, colloidal sulfur, insoluble sulfur, highly dispersed sulfur, and the like can be mentioned.

The sulfur content is 1.6 to 3.0 parts by mass per 100 parts by mass of the rubber component. When the sulfur content is 1.6 parts by mass or more, the crosslinking density can be enhanced to maintain hardness, and also the improving effect on low heat generation properties can be enhanced. When the sulfur content is 3.0 parts by mass or less, the tear strength can be enhanced to improve durability. The sulfur content per 100 parts by mass of the rubber component is preferably 1.8 to 2.8 parts by mass, and more preferably 2.0 to 2.6 parts by mass.

A sulfenamide-based vulcanization accelerator is a vulcanization accelerator having a bonding group -S-N< in the chemical structural formula. As sulfenamide-based vulcanization accelerators, for example, N-(tert-butyl)-2-benzothiazolesulfenamide (TBBS), N-cyclohexyl-2-benzothiazolesulfenamide (CBS), N-oxydiethylene-2-benzothiazolesulfenamide (MBS), N,N-diisopropyl-2-benzothiazolesulfenamide (DIBS), and the like can be mentioned. Any one of them may be used alone, and it is also possible to use two or more kinds together. As the sulfenamide-based vulcanization accelerator, it is preferable to use at least one of TBBS or CBS.

The sulfenamide-based vulcanization accelerator content is 1.6 to 3.0 parts by mass per 100 parts by mass of the rubber component. When the sulfenamide-based vulcanization accelerator content is 1.6 parts by mass or more, the crosslinking density can be enhanced to maintain hardness, and also the improving effect on low heat generation properties can be enhanced. When the sulfenamide-based vulcanization accelerator content is 3.0 parts by mass or less, the tear strength can be enhanced to improve durability. The sulfenamide-based vulcanization accelerator content per 100 parts by mass of the rubber component is preferably 1.8 to 2.8 parts by mass, and more preferably 2.0 to 2.6 parts by mass.

In the case where silica is used as the second filler, it is preferable that the rubber composition further contains a silane coupling agent. As silane coupling agents, for example, sulfide-based silane coupling agents such as bis(3-triethoxysilylpropyl) tetrasulfide, bis(2-triethoxysilylethyl) tetrasulfide, bis(4-triethoxysilylbutyl) tetrasulfide, bis(3-trimethoxysilylpropyl) tetrasulfide, bis(2-trimethoxysilylethyl) tetrasulfide, bis(2-triethoxysilylethyl) trisulfide, bis(4-trimethoxysilylbutyl) trisulfide, bis(3-triethoxysilylpropyl) disulfide, bis(2-triethoxysilylethyl) disulfide, bis(4-triethoxysilylbutyl) disulfide, bis(3-trimethoxysilylpropyl) disulfide, bis(2-trimethoxysilylethyl) disulfide, bis(4-trimethoxysilylbutyl) disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide, mercapto-based silane coupling agents such as 3-mercaptopropyltrimethoxysilane, 2-mercaptoethyltriethoxysilane, and 3-octanoylthio-1-propyltriethoxysilane, and the like can be mentioned. Any one of them may be used alone, and it is also possible to use two or more kinds together.

The silane coupling agent content is preferably 6 parts by mass or more, more preferably 6 to 20 parts by mass, and still more preferably 6 to 15 parts by mass, per 100 parts by mass of silica.

**In** addition to the above components, the rubber composition according to this embodiment can also incorporate various additives generally used in rubber compositions, such as waxes, antioxidants, zinc oxide, stearic acid, oils, and non-sulfenamide-based vulcanization accelerators.

The wax content is not particularly limited and may be, for example, 0 to 10 parts by mass, 0.5 to 5 parts by mass, or 1 to 4 parts by mass, per 100 parts by mass of the rubber component.

As antioxidants, for example, amine-ketone-based, aromatic secondary amine-based, monophenol-based, bisphenol-based, benzimidazole-based, and like various antioxidants can be mentioned. Any one of them can be used alone, and it is also possible to use a combination of two or more kinds. The antioxidant content is not particularly limited and may be, for example, 0 to 10 parts by mass, 0.5 to 5 parts by mass, or 1 to 4 parts by mass, per 100 parts by mass of the rubber component.

The zinc oxide content is not particularly limited and may be, for example, 0 to 10 parts by mass, 0.5 to 7 parts by mass, or 1 to 5 parts by mass, per 100 parts by mass of the rubber component.

The stearic acid content is not particularly limited and may be, for example, 0 to 10 parts by mass, 0.5 to 5 parts by mass, or 1 to 4 parts by mass, per 100 parts by mass of the rubber component.

The rubber composition according to this embodiment can be made by kneading in the usual manner using a commonly used mixing machine such as a Banbury mixer, a kneader, or a roll. That is, for example, in the first mixing stage, additives excluding a vulcanizing agent and a vulcanization accelerator are added to a rubber component and mixed, and then, in the final mixing stage, a vulcanizing agent and a vulcanization accelerator are added to the obtained mixture and mixed, whereby a rubber composition can be prepared.

The rubber composition according to this embodiment can be used for the base tread of a tire. As tires, pneumatic tires of various sizes for various applications, including tires for passenger cars, large tires for trucks and buses, etc., can be mentioned. Pneumatic tires for passenger cars are preferable.

A tire according to this embodiment includes a base tread made using the rubber composition described above. A base tread is an inner layer part of a tread having a multilayered structure. For example, in the case of a tread having a two-layer structure composed of a surface layer (cap tread), which comes into contact with the road surface, and an inside layer (base tread), which is provided inward of the cap tread in the tire radial direction, the inside layer is the base tread.

The method for producing the tire according to this embodiment is not particularly limited. For example, in the usual manner, the above rubber composition is formed into a predetermined shape by extrusion to give an unvulcanized base tread rubber member. The base tread rubber member is combined with other tire members to make an unvulcanized tire (green tire). Subsequently, vulcanization molding is performed at 140°C to 180°C, for example, whereby a tire can be produced.

### Examples

Hereinafter, Examples of the invention will be shown, but the invention is not limited to these Examples.

Components used in the Examples and Comparative Examples are as follows.
- Natural rubber: RSS #3
- Butadiene rubber 1: High-cis BR (cis-1,4 bond content: 95 mass%), "BR730" manufactured by ENEOS Materials Corporation
- Butadiene rubber 2: End-modified BR, "Nipol BR1250H" manufactured by Zeon Corporation
- Carbon black 1: N₂SA = 27 m²/g, "SEAST V" manufactured by Tokai Carbon Co., Ltd.
- Carbon black 2: N₂SA = 42 m²/g, "SEAST SO" manufactured by Tokai Carbon Co., Ltd.
- Carbon black 3: N₂SA = 84 m²/g, "SEAST 300" manufactured by Tokai Carbon Co., Ltd.
- Carbon black 4: N₂SA = 93 m²/g, "SEAST KH" manufactured by Tokai Carbon Co., Ltd.
- Silica: "Nipsil AQ" manufactured by Tosoh Silica Corporation (nitrogen adsorption specific surface area: 205 m²/g)
- Silane coupling agent: Sulfide-based, "Si75" manufactured by Evonik Japan Co., Ltd.
- Wax: "OZOACE 1722" manufactured by Nippon Seiro Co., Ltd.
- Antioxidant 1: "Nocrac 6C" manufactured by Ouchi Shinko Chemical Industrial Co., Ltd.
- Antioxidant 2: "ANTIOXIDANT TMQ" manufactured by Kemai Chemical Co., Ltd.
- Zinc oxide: "Zinc Oxide, Type 3" manufactured by Mitsui Mining & Smelting Co., Ltd.
- Stearic acid: "LUNAC S20" manufactured by Kao Corporation
- Sulfur: "5% Oil-Treated Powdered Sulfur" manufactured by Tsurumi Chemical Industry Co., Ltd.
- Vulcanization accelerator 1: TBBS, Sanceler NS-G manufactured by Sanshin Chemical Industry Co., Ltd.
- Vulcanization accelerator 2: CBS, "Sanceler CM-G" manufactured by Sanshin Chemical Industry Co., Ltd.
- Vulcanization accelerator 3: 1,3-Diphenylguanidine, "SOXINOL D-G" manufactured by Sumitomo Chemical Co., Ltd.

Using a Banbury mixer, following the formulations (parts by mass) shown in Tables 1 and 2 below, first, in the first mixing stage, ingredients excluding sulfur and a vulcanization accelerator were added to a rubber component and kneaded (discharge temperature = 155°C). Next, in the final mixing stage, sulfur and a vulcanization accelerator were added to the obtained kneaded product and kneaded (discharge temperature = 90°C), thereby preparing a rubber composition.

In Tables 1 and 2, "Sulfur (Net)" in the formulation is the amount as sulfur excluding oils.

Each obtained rubber composition was vulcanized at 150°C for 30 minutes to make a vulcanized rubber sample of a predetermined shape. Using the obtained rubber samples, the hardness, low heat generation properties, and tear strength were evaluated. The evaluation methods are as follows.
- Hardness: A rubber sample having a thickness of 12.5 mm was measured for hardness at 23°C in accordance with JIS K6253-3:2012, Durometer Type A Method. The larger this value, the better the steering stability.
- Low Heat Generation Properties: Measured in accordance with JIS K6394:2007. Specifically, using a viscoelasticity measuring apparatus manufactured by GABO, the loss factor tan δ of a rubber sample 5 mm wide × 40 mm long × 2 mm thick was measured under conditions of a temperature of 60°C, a static strain of 10%, a dynamic strain of 1%, and a frequency of 10 Hz (tensile mode), and expressed as an index taking the value of Comparative Example 1 as 100. The smaller the index, the lower the tan δ, that is, the less likely heat is to be generated, indicating better low heat generation properties.
- Tear Strength: Measured in accordance with JIS K6252-1:2015. Specifically, using a tensile tester manufactured by Shimadzu Corporation, a rubber sample (2 mm thick) punched in a crescent shape and having a 0.50±0.08-mm cut made at the center of the indentation was subjected to the test at a tensile speed of 500 mm/min. The maximum tear strength until the rubber sample reached fracture was read, and expressed as an index taking the value of Comparative Example 1 as 100. The larger the index, the higher the tear strength, indicating better durability during high-speed driving (high-speed durability). When the index is 80 or more, the high-speed durability can be said to be sufficient.

**[Table 1]**

| | Ex. 1 | Ex 2 | Ex 3 | Ex. 4 | Ex. 5 | Ex. 6 | Ex. 7 | Ex 8 | Ex 9 |
|---|---|---|---|---|---|---|---|---|---|
| Formulation (parts by mass) | | | | | | | | | |
| Natural Rubber | 100 | 70 | 80 | 80 | 80 | 80 | 80 | 100 | 100 |
| Butadiene Rubber 1 | | 30 | | | | | | | |
| Butadiene Rubber 2 | | | 20 | 20 | 20 | 20 | 20 | | |
| Carbon Black 1 | 15 | 15 | 10 | 10 | 10 | 22 | | 15 | 15 |
| Carbon Black 2 | 12 | 12 | | 10 | | 18 | 20 | 12 | 12 |
| Carbon Black 3 | | | 25 | | | | | | |
| Carbon Black 4 | | | | 15 | | | 25 | | |
| Silica | 20 | 20 | | | 30 | 20 | | 20 | 20 |
| Silane Coupling Agent | 1.6 | 16 | | | 2.4 | 1.6 | | 16 | 1.6 |
| Wax | 2 | 2 | 2 | 2 | 2 | 2 | 2 | 2 | 2 |
| Antioxidant 1 | 2 | 2 | 2 | 2 | 2 | 2 | 2 | 2 | 2 |
| Antioxidant 2 | 1 | 1 | 1 | 1 | 1 | 1 | 1 | 1 | 1 |
| Zinc Oxide | 2 | 2 | 2 | 2 | 2 | 2 | 2 | 2 | 2 |
| Stearic Acid | 2 | 2 | 2 | 2 | 2 | 2 | 2 | 2 | 2 |
| Sulfur (Net) | 2.3 | 2.3 | 2.3 | 2.3 | 2.3 | 2.3 | 1.6 | 3.0 | 2.3 |
| Vulcanization Accelerator 1 | 2.1 | 2.1 | 19 | 1.6 | 1.6 | 1.6 | | 2.5 | 3.0 |
| Vulcanization Accelerator 2 | | | | | | | 2.1 | | |
| Vulcanization Accelerator 3 | | | | | | | | | |
| Evaluation | | | | | | | | | |
| Hardness | A60 | A61 | A61 | A60 | A62 | A65 | A59 | A62 | A63 |
| Low Heat Generation Properties (Index) | 78 | 71 | 90 | 87 | 85 | 84 | 89 | 72 | 74 |
| Tear Strength (Index) | 113 | 80 | 113 | 115 | 123 | 165 | 85 | 83 | 93 |

**[Table 2]**

| | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 | Comp. Ex. 9 | Comp. Ex. 10 | Comp. Ex. 11 |
|---|---|---|---|---|---|---|---|---|---|---|---|
| Formulation (parts by mass) | | | | | | | | | | | |
| Natural Rubber | 75 | 60 | 100 | 100 | 100 | 100 | 100 | 100 | 100 | 100 | 100 |
| Butadiene Rubber 1 | 25 | 40 | | | | | | | | | |
| Butadiene Rubber 2 | | | | | | | | | | | |
| Carbon Black 1 | | 15 | 10 | 40 | 45 | | 15 | 15 | 15 | 15 | 15 |
| Carbon Black 2 | 30 | 12 | 20 | | | | 12 | 12 | 12 | 12 | 12 |
| Carbon Black 3 | | | | | | 20 | | | | | |
| Carbon Black 4 | | | | | | | | | | | |
| Silica | | 20 | | 30 | | 20 | 20 | 20 | 20 | 20 | 20 |
| Silane Coupling Agent | | 1.6 | | 1.6 | | | 1.6 | 1.6 | 1.6 | 1.6 | 1.6 |
| Wax | 2 | 2 | 2 | 2 | 2 | 2 | 2 | 2 | 2 | 2 | 2 |
| Antioxidant 1 | 2 | 2 | 2 | 2 | 2 | 2 | 2 | 2 | 2 | 2 | 2 |
| Antioxidant 2 | 1 | 1 | 1 | 1 | 1 | 1 | 1 | 1 | 1 | 1 | 1 |
| Zinc Oxide | 2 | 2 | 2 | 2 | 2 | 2 | 2 | 2 | 2 | 2 | 2 |
| Stearic Acid | 2 | 2 | 2 | 2 | 2 | 2 | 2 | 2 | 2 | 2 | 2 |
| Sulfur (Net) | 1.8 | 2.3 | 2.3 | 2.3 | 2.3 | 2.3 | 1.4 | 3.5 | 2.3 | 2.3 | 2.3 |
| Vulcanization Accelerator 1 | 1.5 | 2.1 | 2.1 | 2.1 | 2.1 | 2.1 | 2.1 | 2.1 | 1.4 | 3.5 | |
| Vulcanization Accelerator 2 | | | | | | | | | | | |
| Vulcanization Accelerator 3 | | | | | | | | | | | 2.5 |
| Evaluation | | | | | | | | | | | |
| Hardness | A56 | A61 | A53 | A64 | A55 | A63 | A58 | A63 | A58 | A64 | A58 |
| Low Heat Generation Properties (Index) | 100 | 68 | 63 | 119 | 64 | 116 | 102 | 70 | 109 | 71 | 109 |
| Tear Strength (Index) | 100 | 55 | 105 | 145 | 85 | 128 | 155 | 65 | 143 | 48 | 215 |

The results are as shown in Tables 1 and 2. In Examples 1 to 9 according to this embodiment, while sufficient high-speed durability was maintained, compared to Comparative Example 1 (conventional standard example), the low heat generation properties were superior, and also the hardness was A58 or more, indicating superior steering stability.

In contrast, in Comparative Example 2, because the proportion of natural rubber was low, the tear strength significantly decreased, and the high-speed durability was poor. In Comparative Example 3, as a result of replacing part of the carbon black with one having a smaller N₂SA and increasing the amount of vulcanization system compared to Comparative Example 1, the low heat generation properties were improved. However, because the total filler amount was small, as in Comparative Example 1, the hardness was low, and the steering stability was poor. In Comparative Example 4, the total filler amount of was too large, and the low heat generation properties were poor.

In Comparative Example 5, although the total filler amount satisfied the specified amount, because the second filler was not incorporated, the hardness was low, and the steering stability was poor. In Comparative Example 6, although the total filler amount satisfied the specified amount, because the first filler was not incorporated, the low heat generation properties were poor. In Comparative Example 7, the amount of sulfur was small, and the low heat generation properties were poor. In Comparative Example 8, the amount of sulfur was too large, thus the tear strength significantly decreased, and the high-speed durability was poor. In Comparative Example 9, the amount of sulfenamide-based vulcanization accelerator was small, and the low heat generation properties were poor. In Comparative Example 10, the amount of sulfenamide-based vulcanization accelerator was too large, thus the tear strength significantly reduced, and the high-speed durability was poor. In Comparative Example 11, because a guanidine-based vulcanization accelerator was used in place of a sulfenamide-based vulcanization accelerator, the low heat generation properties were poor.
Incidentally, with respect to the various numerical ranges described herein, the upper and lower limits thereof can be arbitrarily combined, and all such combinations are incorporated herein as preferred numerical ranges. In addition, the description of a numerical range "X to Y" means X or more and Y or less.

## Claims

1. A rubber composition for a base tread, comprising a rubber component, a first filler that is carbon black having a nitrogen adsorption specific surface area of less than 60 m²/g, a second filler that is carbon black having a nitrogen adsorption specific surface area of 60 m²/g or more and/or silica, sulfur, and a sulfenamide-based vulcanization accelerator, wherein
the rubber component contains 70 mass% or more of natural rubber, and,
per 100 parts by mass of the rubber component, the amount of the first filler is 10 to 45 parts by mass, the amount of the second filler is 15 to 30 parts by mass, the total amount of the first filler and the second filler is 35 to 60 parts by mass, the amount of the sulfur is 1.6 to 3.0 parts by mass, and the amount of the sulfenamide-based vulcanization accelerator is 1.6 to 3.0 parts by mass.

2. The rubber composition for a base tread according to claim 1, wherein the nitrogen adsorption specific surface area of the carbon black in the first filler is 20 m²/g or more and less than 60 m²/g.

3. The rubber composition for a base tread according to claim 1 or 2, wherein the nitrogen adsorption specific surface area of the carbon black in the second filler is 60 m²/g or more and 100 m²/g or less.

4. The rubber composition for a base tread according to any one of claims 1 to 3, wherein the sulfenamide-based vulcanization accelerator is at least one selected from the group consisting of N-(tert-butyl)-2-benzothiazole sulfenamide and N-cyclohexyl-2-benzothiazole sulfenamide.

5. The rubber composition for a base tread according to any one of claims 1 to 4, wherein the first filler includes carbon black (A1) having a nitrogen adsorption specific surface area of 20 m²/g or more and less than 40 m²/g and carbon black (A2) having a nitrogen adsorption specific surface area of 40 m²/g or more and less than 60 m²/g.

6. The rubber composition for a base tread according to claim 5, wherein the mass ratio (A1)/(A2) of the carbon black (A1) to the carbon black (A2) is 20/80 to 80/20.

7. The rubber composition for a base tread according to any one of claims 1 to 6, wherein the second filler contains the silica in an amount of 50 to 100 mass%.

8. The rubber composition for a base tread according to any one of claims 1 to 7, further comprising 6 parts by mass or more of a silane coupling agent per 100 parts by mass of the silica.

9. A tire comprising a base tread formed from the rubber composition for a base tread according to any one of claims 1 to 8.
